# EUROPÄISCHE PATENTSCHRIFT

(11) **EP 2 480 438 B1**
(45) Veröffentlichungstag und Bekanntmachung des Hinweises auf die Patenterteilung: **02.10.2013**
(21) Anmeldenummer: 11788040.1
(22) Anmeldetag: 15.11.2011
(51) Int. Cl.: B60T 10/02, F16D 57/04

(54) **ANTRIEBSSTRANG MIT EINEM HYDRODYNAMISCHEN RETARDER**
DRIVE TRAIN WITH A HYDRODYNAMIC RETARDER
ENSEMBLE DE TRANSMISSION AVEC UN RALENTISSEUR HYDRODYNAMIQUE

(30) Priorität: 19.11.2010 DE 102010051715
(43) Veröffentlichungstag der Anmeldung: 01.08.2012
(73) Patentinhaber: Voith Patent GmbH, 89522 Heidenheim (DE)
(72) Erfinder: HUTH, Tilman, 74589 Satteldorf (DE); LAUKEMANN, Dieter, 74564 Crailsheim (DE)
(74) Vertreter: Dr. Weitzel & Partner
(86) Internationale Anmeldenummer: PCT/EP2011/005742
(87) Internationale Veröffentlichungsnummer: WO 2012/065714

(56) Entgegenhaltungen:
- DE-A1- 3 837 142
- DE-A1- 3 930 540
- DE-A1-102009 027 390

## Beschreibung

Die vorliegende Erfindung betrifft einen Antriebsstrang mit einem hydrodynamischen Retarder, insbesondere einen Kraftfahrzeugantriebsstrang, im Einzelnen gemäß dem Oberbegriff von Anspruch 1.

Hydrodynamische Retarder werden seit langem als verschleißfreie Dauerbremsen in Kraftfahrzeugen oder auch in stationären Anlagen eingesetzt. Herkömmlich unterscheidet man zwischen Primärretardern, in Abhängigkeit der Drehzahl des Antriebsmotors arbeiten, und zwischen Sekundärretardern, die auf der Getriebeabtriebswelle oder einem Nebenabtrieb des Getriebes angeordnet sind und damit in Abhängigkeit der Drehzahl der Getriebeabtriebswelle und somit in Abhängigkeit der Fahrgeschwindigkeit arbeiten.

Auf der Primärseite des Antriebsmotors angeordnete Primärretarder werden beispielsweise in den Druckschriften DE 44 08 349, DE 44 08 350, DE 44 40 162 und DE 199 39 726 beschrieben.

DE 44 46 288 beschreibt einen Primärretarder auf der Primärseite des Motors, und einen zweiten Retarder, der als Sekundärretarder getriebeabtriebsseitig angeordnet ist.

Das Dokument DE 198 40 284 A1 beschreibt einen Primärretarder, der unmittelbar auf der Getriebeeingangswelle angeordnet ist.

Das Dokument DE 2 017 617 beschreibt einen seitlich am Getriebe angeordneten hydrodynamischen Retarder, dessen Rotor über ein Zwischenzahnrad mit einem Zahnrad des Getriebes, beispielsweise dem Kopfzahnrad am vorderen Ende der Vorgelegewelle des Getriebes, in Eingriff steht.

Das Dokument DE 44 45 024 beschreibt einen sekundärseitig auf einem Hochtrieb des Getriebes angeordneten Retarder.

DE 196 41 557 A1 beschreibt einen fahrgeschwindigkeitsabhängig betriebenen Retarder, demnach Sekundärretarder, der jedoch auch auf der Primärseite des Getriebes, insbesondere zusammen mit einer Wasserpumpe angeordnet werden kann.

Das Dokument EP 1 548 315 B1 beschreibt die Anordnung eines hydrodynamischen Retarders auf einem Nebenabtrieb, einem sogenannten "Power Take-Off" des Antriebsmotors in einem vom Antriebsmotor getragenen Gehäuse, wobei die Retarderantrfebswelle einen Flansch zum Anschluss eines weiteren Nebenaggregates aufweist.

DE 3837142 A1 offenbart einen Nebenabtriebsretarder mit einem vorgeschalteten Planetengetriebe.

Obwohl somit bereits zahlreiche Anordnungsmöglichkeiten für einen hydrodynamischen Retarder im Antriebsstrang vorgeschlagen wurden, gibt es einen fortwährenden Bedarf, den Retarder kostengünstig in den Antriebsstrang zu integrieren.

Der Erfindung liegt demnach die Aufgabe zugrunde, einen Antriebsstrang mit einem hydrodynamischen Retarder anzugeben, bei welchem eine Integration und insbesondere eine Nachrüstung des Retarders besonders kostengünstig möglich ist. Dabei soll die Integration den Bedarf einer Umgestaltung des Antriebsstranges minimieren, vorhandenen Bauraum optimal ausnutzen und bestehende Komponenten zur Integration des Retarders sinnvoll nutzen.

Die erfindungsgemäße Aufgabe wird durch einen Antriebsstrang mit den Merkmalen von Anspruch 1 gelöst. Die abhängigen Ansprüche beschreiben vorteilhafte und besonders zweckmäßige Ausgestaltungen der Erfindung.

Die Erfindung sieht die Integration eines hydrodynamischen Retarders an einem Nebenabtrieb des Antriebsmotors vor, jedoch nicht auf der herkömmlich verwendeten getriebefernen Primärseite des Antriebsmotors, sondern an einem Nebenabtrieb des Antriebsmotors auf der Seite des Getriebes, somit der Sekundärseite des Antriebsmotors. Die Anordnung benötigt demnach keinen Bauraum im Bereich der Hauptabtriebswelle des Antriebsmotors beziehungsweise der Getriebeeingangswelle des dem Antriebsmotor nachgeschalteten Getriebes und das Getriebegehäuse kann bei Bedarf geschickt zum Lagern einzelner Komponenten des Retarders, insbesondere des Sekundärrades des Retarders, oder des gesamten Retarders verwendet werden. Gleichzeitig bleiben Nebenabtriebe des Antriebsmotors auf dessen Primärseite, auch als Power Take-Off bezeichnet, frei für andere Nebenaggregate, ohne dass die eingangs beschriebene Notwendigkeit besteht, auf der Retarderantriebswelle einen weiteren Flansch zur Aufnahme beziehungsweise zum Anschluss weiterer Nebenaggregate vorzusehen. Dies bedeutet nicht, dass bei der vorliegenden erfindungsgemäßen Anordnung eine solche Anschlussmöglichkeit auf der Sekundärseite des Antriebsmotors nicht vorgesehen werden kann.

Im Einzelnen weist der erfindungsgemäße Antriebsstrang, insbesondere Kraftfahrzeugantriebsstrang, einen Antriebsmotor mit einer Hauptabtriebswelle und ein dem Antriebsmotor im Antriebsleistungsschluss nachgeschaltetes Getriebe mit einer Getriebeeingangswelle und einem Getriebegehäuse auf. Die Getriebeeingangswelle steht mit der Hauptabtriebswelle des Antriebsmotors in Triebverbindung oder ist mittels einer Kupplung in eine solche schaltbar.

Der Antriebsmotor ist insbesondere als Verbrennungsmotor ausgeführt, umfassend eine Kurbelwelle. Die Kurbelwelle kann die Hauptabtriebswelle ausbilden und demgemäß mit der Getriebeeingangswelle verbunden oder verbindbar sein.

Das Getriebe ist vorteilhaft als Wechselgetriebe ausgeführt, insbesondere als Automatgetriebe, automatisiertes Schaltgetriebe oder Handschaltgetriebe. Auch andere Getriebebauarten, beispielsweise stufenlose Getriebe oder Doppelkupplungsgetriebe kommen in Betracht. In der Regel werden Antriebsräder des Kraftfahrzeugs entsprechend vom Antriebsmotor über das Getriebe angetrieben, in der Regel unter Zwischenschaltung einer Kardanwelle.

Alternativ ist die Erfindung jedoch auch bei einem stationären Antriebsstrang anwendbar, bei welchem ein Aggregat über das Getriebe vom Antriebsmotor angetrieben wird. Auch bei der Anwendung in einem Kraftfahrzeug kann das Getriebe im Antriebsleistungsfluss zwischen dem Antriebsmotor und einem Aggregat des Kraftfahrzeugs, das mittels des Antriebsmotors angetrieben werden soll, angeordnet sein.

Erfindungsgemäß ist ein hydrodynamischer Retarder vorgesehen, umfassend ein angetriebenes beschaufeltes Primärrad, auch Rotor genannt, und ein stationäres oder gegenläufig zum Primärrad angetriebenes beschaufeltes Sekundärrad. Wenn das Sekundärrad gegenläufig zum Primärrad angetrieben ist, wird ein Gegenlaufretarder ausgebildet. Wenn das Sekundärrad stationär ist, wird es als Stator bezeichnet.

Primärrad und Sekundärrad bilden miteinander einen mit Arbeitsmedium befüllbaren oder befüllten Arbeitsraum, in welchem sich im Bremsbetrieb eine Kreislaufströmung eines Arbeitsmediums einstellt, um Drehmoment hydrodynamisch vom Primärrad auf das Sekundärrad zu übertragen und dadurch das Primärrad abzubremsen.

Der Antriebsmotor weist eine Nebenabtriebswelle auf, über welche das Primärrad des Retarders angetrieben wird.

Erfindungsgemäß ist nun der hydrodynamische Retarder auf der Seite des Getriebes an der Nebenabtriebswelle des Antriebsmotors angeschlossen positioniert.

Gemäß einer erfindungsgemäßen Ausführungsform wird das Primärrad des Retarders durch die Nebenabtriebswelle des Antriebsmotors getragen. Besonders günstig ist das Primärrad des Retarders fliegend auf der Nebenabtriebswelle gelagert.

Alternativ kann der Retarder eine Retardereingangswelle und ein Retardergehäuse aufweisen, wobei die Retardereingangswelle im Retardergehäuse gelagert ist und insbesondere das Primärrad trägt. Die Retardereingangswelle ist dann an der Nebenabtriebswelle, insbesondere unmittelbar angeschlossen. Alternativ steht die Retardereingangswelle über eine oder mehrere weitere zwischengeschaltete Wellen und/oder Übersetzungen, insbesondere durch Zahnräder, in Triebverbindung.

Das Retardergehäuse kann am Motorgehäuse gelagert sein. Zusätzlich oder alternativ ist das Retardergehäuse am Getriebegehäuse gelagert.

Wenn das Retardergehäuse am Getriebegehäuse gelagert ist, kann die Lagerung derart ausgeführt sein, dass das Retardergehäuse insbesondere ausschließlich durch das Getriebegehäuse getragen wird. Alternativ sind zusätzliche Abstützungen am Motorgehäuse vorhanden. Umgekehrt kann das Retardergehäuse oder nur das Sekundärrad des Retarders gegen Verdrehen am Getriebegehäuse abgestützt sein, wobei die Lagerung des Sekundärrades beziehungsweise des Retardergehäuses dann an einem anderen Bauteil, insbesondere dem Motorgehäuse erfolgen kann.

Wenn dem Retarder ein Wärmetauscher zugeordnet ist, über welchen Wärme aus dem Arbeitsmedium des Retarders, insbesondere Öl, abgeführt wird, so kann dieser Wärmetauscher am Retardergehäuse und/oder Getriebegehäuse und/oder Motorgehäuse gelagert sein beziehungsweise durch die entsprechende Komponente getragen werden. Hinsichtlich der Wärmeübertragung kann an dem Wärmetauscher sekundärseitig ein Fahrzeugkühlkreislauf, insbesondere mit Wasser oder einem Wassergemisch als Kühlmedium, angeschlossen sein, mittels welchem auch der Antriebsmotor gekühlt wird. Somit kann Wärme aus dem Retarderarbeitsmedium in das Kühlmedium abgeleitet werden.

Gemäß einer anderen Ausführungsform ist der Retarder in den Fahrzeugkühlkreislauf integriert und das Kühlmedium ist zugleich das Arbeitsmedium des Retarders.

Sowohl bei der Ausführung mit einem gegenläufigen Sekundärrad als auch mit einem stationären Sekundärrad kann das Sekundärrad vorteilhaft im Retardergehäuse gelagert sein.

Die Erfindung soll nachfolgend anhand zweier Ausführungsbeispiele und den Figuren exemplarisch erläutert werden.

Es zeigen:
- Figur 1: eine erste erfindungsgemäße Ausführungsform mit einer fliegenden Lagerung des Primärrades des Retarders auf der Nebenabtriebswelle des Antriebsmotors;
- Figur 2: eine Lagerung des Primärrades des Retarders in einem Retardergehäuse, das auf dem Getriebegehäuse gelagert ist.

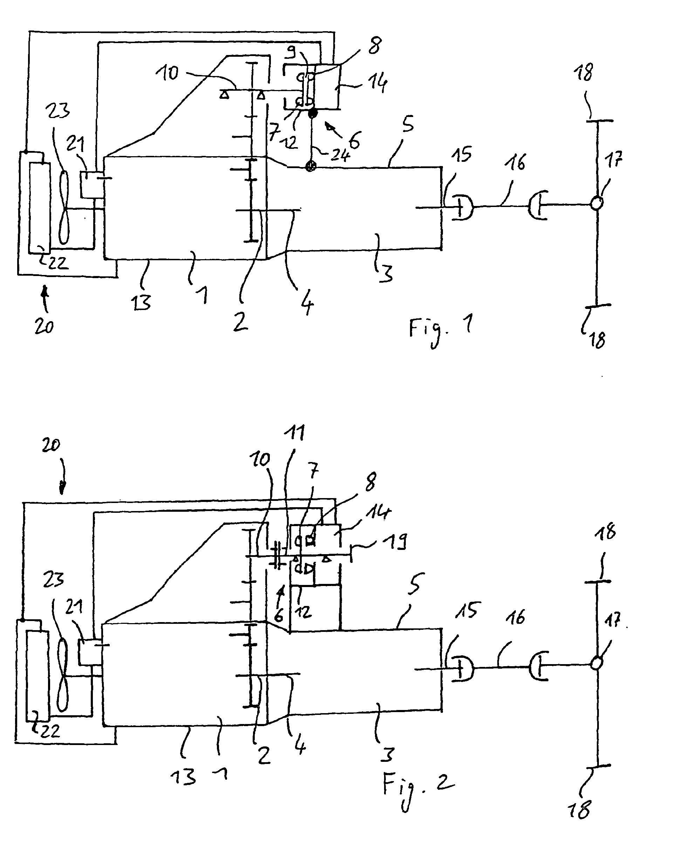

In den Figuren 1 und 2 ist ein Antriebsmotor 1 mit einem unmittelbar hieran angeschlossenen Getriebe 3 dargestellt. Der Antriebsmotor 1 weist eine Hauptabtriebswelle 2 auf, die mit einer Getriebeeingangswelle 4 in Verbindung steht. In dieser Triebverbindung kann bei Bedarf eine Kupplung (nicht dargestellt) vorgesehen sein, um die Getriebeeingangswelle 4 von der Hauptabtriebswelle 2 des Antriebsmotors 1 zu trennen.

Der Antriebsmotor 1 weist ein Motorgehäuse 13 und das Getriebe 3 weist ein Getriebegehäuse 5 auf, welche die entsprechenden Komponenten dieser Bauteile umschließen. Im Getriebe 3 können verschiedene Übersetzungen zwischen der Getriebeeingangswelle 4 und einer Getriebeausgangswelle 15 durch Schalten entsprechender Kupplungen und/oder Bremsen hergestellt werden. Die Getriebeausgangswelle 15 treibt über eine Kardanwelle 16 und ein Differentialgetriebe 17 Antriebsräder 18 des Kraftfahrzeugs an.

Ein hydrodynamischer Retarder 6, umfassend ein umlaufendes Primärrad 7 und ein stationäres Sekundärrad 8, die miteinander einen torusförmigen Arbeitsraum 9 ausbilden, ist an einer Nebenabtriebswelle 10 des Antriebsmotors 1 auf dessen Sekundärseite angeschlossen. Der hydrodynamische Retarder 6 weist ein Retardergehäuse 12 auf, welches das Primärrad 7 und das Sekundärrad 8 umschließt und in welchem das Sekundärrad 8 drehfest abgestützt ist. Gemäß der Ausführungsform in der Figur 2 ist das Primärrad 7 auf einer Retardereingangswelle 11 getragen und im Retardergehäuse 12 gelagert, wohingegen das Primärrad 7 gemäß der Figur 1 fliegend auf der Nebenabtriebswelle 10 gelagert ist und nur das Sekundärrad 8 im Retardergehäuse 12 getragen wird.

Bei beiden in den Figuren 1 und 2 dargestellten Ausführungsbeispielen ist am Retardergehäuse 12 ferner ein Wärmetauscher 14 angeschlossen und von diesem getragen, der in einem Fahrzeugkühlkreislauf 20 eingebunden ist, um das Arbeitsmedium des Retarders 6 zu kühlen. Mittels des Fahrzeugkühlkreislaufes 20, in dem eine vom Antriebsmotor 1 auf einem Nebenabtrieb auf der Primärseite des Antriebsmotors 1 angeordnete Kühlmediumpumpe 21 angeordnet ist, sowie ein Kühler 22, um Wärme aus dem Fahrzeugkühlkreislauf 20 an die Umgebung abzuleiten, bei Bedarf unter Zuhilfenahme des vom Fahrzeugantriebsmotor 1 angetriebenen Ventilators 23, wird auch der Antriebsmotor 1 gekühlt.

Die Nebenabtriebswelle 10 ist innerhalb des Motorgehäuses 13 gelagert und steht mit der Hauptabtriebswelle 2 über zwischengeschaltete Zahnradstufen in Triebverbindung. Bei der Ausführungsform gemäß der Figur 2 ist die Nebenabtriebswelle 10 koaxial mit der Retardereingangswelle 11 verbunden, beispielsweise über die schematisch dargestellte Flanschverbindung.

Bei der Ausführungsform gemäß der Figur 1 ist das Retardergehäuse 12 gegen Verdrehung am Getriebegehäuse 5 abgestützt, siehe die exemplarisch dargestellte Drehmomentstütze 24. Alternativ könnte das Retardergehäuse 12 vollständig vom Getriebegehäuse 5 getragen werden.

Ferner kann bei der Ausführungsform gemäß der Figur 1 das Retardergehäuse 12 am Motorgehäuse 13 lösbar oder unlösbar angeschlossen sein.

Bei der Ausführungsform gemäß der Figur 2 wird das Retardergehäuse 12 vom Getriebegehäuse 5 getragen. Ein Anschluss des Retardergehäuses 12 am Motorgehäuse 13 kann demnach entfallen oder zusätzlich vorgesehen sein.

## Patentansprüche

1. Antriebsstrang, insbesondere eines Kraftfahrzeugs,
1.1 mit einem Antriebsmotor (1), umfassend eine Hauptabtriebswelle (2);
1.2 mit einem dem Antriebsmotor (1) im Antriebsleistungsfluss nachgeschalteten Getriebe (3), umfassend eine Getriebeeingangswelle (4) und ein Getriebegehäuse (5);
1.3 die Getriebeeingangswelle (4) steht mit der Hauptabtriebswelle (2) des Antriebsmotors (1) in Triebverbindung oder ist mittels einer Kupplung in eine solche schaltbar;
1.4 mit einem hydrodynamischen Retarder (6), umfassend ein angetriebenes beschaufeltes Primärrad (7) und ein stationäres oder gegenläufig zum Primärrad (7) angetriebenes beschaufeltes Sekundärrad (8), die miteinander einen torusförmigen mit einem Arbeitsmedium befüllten oder befüllbaren Arbeitsraum (9) ausbilden, um Drehmoment hydrodynamisch vom Primärrad (7) auf das Sekundärrad (8) zu übertragen;
1.5 der Antriebsmotor (1) weist eine Nebenabtriebswelle (10) auf, über welche das Primärrad (7) des Retarders (6) angetrieben wird;
**dadurch gekennzeichnet, dass**
1.6 der hydrodynamische Retarder (6) auf der Seite des Getriebes (3) an der Nebenabtriebswelle (10) des Antriebsmotors (1) angeschlossen positioniert ist.

2. Antriebsstrang gemäß Anspruch 1, **dadurch gekennzeichnet, dass** zumindest das Sekundärrad (8) des Retarders (6) am Getriebegehäuse (5) gelagert ist.

3. Antriebsstrang gemäß einem der Ansprüche 1 oder 2, **dadurch gekennzeichnet, dass** das Primärrad (7) des Retarders (6) durch die Nebenabtriebswelle (10) getragen wird und insbesondere fliegend auf dieser gelagert ist.

4. Antriebsstrang gemäß einem der Ansprüche 1 oder 2, **dadurch gekennzeichnet, dass** der Retarder (6) eine Retardereingangswelle (11) und ein Retardergehäuse (12) aufweist, die Retardereingangswelle (11) im Retardergehäuse (12) gelagert ist und insbesondere das Primärrad (7) trägt, und die Retardereingangswelle (11) an der Nebenabtriebswelle (10), insbesondere unmittelbar, angeschlossen ist.

5. Antriebsstrang gemäß einem der Ansprüche 3 oder 4, **dadurch gekennzeichnet, dass** der Antriebsmotor (1) ein Motorgehäuse (13) umfasst und das Retardergehäuse (12) am Motorgehäuse (13) und insbesondere zusätzlich am Getriebegehäuse (5) gelagert ist.

6. Antriebsstrang gemäß Anspruch 4, **dadurch gekennzeichnet, dass** das Retardergehäuse (12) am Getriebegehäuse (5) gelagert ist und durch dieses getragen wird.

7. Antriebsstrang gemäß einem der Ansprüche 1 bis 6, **dadurch gekennzeichnet, dass** das Sekundärrad (8) gegen Verdrehen am Getriebegehäuse (5) abgestützt ist.

8. Antriebsstrang gemäß einem der Ansprüche 1 bis 7, **dadurch gekennzeichnet, dass** der Retarder (6) einen Wärmetauscher (14) aufweist, über welchen Wärme aus dem Arbeitsmedium, insbesondere Öl, abgeführt wird, insbesondere in einem hinsichtlich der Wärmeübertragung sekundärseitig am Wärmetauscher (14) angeschlossenen Fahrzeugkühlkreislauf (20), über welchen auch der Antriebsmotor (1) gekühlt wird, und der Wärmetauscher (14) insbesondere zusammen mit dem Retardergehäuse (12) am Getriebegehäuse (5) gelagert ist.

9. Antriebsstrang gemäß einem der Ansprüche 5 bis 8, **dadurch gekennzeichnet, dass** das Sekundärrad (8) im Retardergehäuse (12) gelagert ist.

## Claims

1. A drive train in particular of a motor vehicle,
1.1 having a drive motor (1), including a main output shaft (2);
1.2 having a transmission (3) connected downstream of the drive motor (1) in the drive power flow, comprising a transmission input shaft (4) and a transmission housing (5);
1.3 the transmission input shaft (4) is in driving connection with the main output shaft (2) of the drive motor or can be switched into such connection by means of a coupling;
1.4 having a hydrodynamic retarder (6), comprising a driven bladed primary wheel (7) and a stationary bladed secondary wheel (8) or which is driven in reverse direction of the primary wheel (7), whereas both wheels form together a toroidal work space which is filled or can be filled with working medium, for hydrodynamic transmission of torque from the primary wheel (7) to the secondary wheel (8);
1.5 the drive motor (1) includes an auxiliary output shaft (10), via which the primary wheel (7) of the retarder (6) is driven;
**characterised in that**
1.6 the hydrodynamic retarder (6) is connected to the auxiliary output shaft (10) of the drive motor (1) on the transmission side (3).

2. A drive train according to claim 1, **characterised in that** at least the secondary wheel (8) of the retarder (6) is mounted on the transmission housing (5).

3. A drive train (1) according to one of claims 1 or 2, **characterised in that** the primary wheel (7) of the retarder (6) is carried by the auxiliary output shaft (10) and in particular is mounted overhung thereon.

4. A drive train (1) according to one of claims 1 or 2, **characterised in that** the retarder (6) comprises a retarder input shaft (11) and a retarder housing (12), the retarder input shaft (11) is mounted in the retarder housing (12) and in particular carries the primary wheel (7), and the retarder input shaft (11) is connected to the auxiliary output shaft (10), in particular directly.

5. A drive train (3) according to one of claims 3 or 4, **characterised in that** the drive motor (1) comprises an engine housing (13) and the retarder housing (12) is mounted on the engine housing (13) and in particular additionally on the transmission housing (5).

6. A drive train according to claim 4, **characterised in that** the retarder housing (12) is mounted on the transmission housing (5) and is carried by said transmission housing.

7. A drive train (1) according to one of claims 1 to 6, **characterised in that** the secondary wheel (8) is supported to prevent bending on the transmission housing (5).

8. A drive train (1) according to one of claims 1 to 7, **characterised in that** the retarder (6) comprises a heat exchanger (14), via which heat is discharged from the working medium, in particular oil, in particular in a vehicle cooling circuit (20) connected to the heat exchanger (14) on the secondary side as regards heat transfer, via which the drive motor (1) is also cooled, and the heat exchanger (14) is mounted on the transmission housing (5) in particular together with the retarder housing (12).

9. A drive train (5) according to one of claims 5 to 8, **characterised in that** the secondary wheel (8) is mounted in the retarder housing (12).

## Revendications

1. Train d'entraînement, en particulier d'un véhicule automobile,
1.1 pourvu d'un moteur d'entraînement (1), comprenant un arbre de sortie principal (2);
1.2 pourvu d'une transmission (3) connectée en aval du moteur d'entraînement (1) dans le flux de puissance d'entraînement, comprenant un arbre d'entrée de transmission (4) et un carter de boîte de vitesses (5);
1.3 l'arbre d'entrée de transmission (4) est en liaison motrice avec l'arbre de sortie principal (2) du moteur d'entraînement (1) ou bien peut s'embrayer à l'aide d'un accouplement pour assurer une telle liaison;
1.4 pourvu d'un retardateur hydrodynamique (6), comportant une roue primaire à aubes entraînée (7) et une roue secondaire à aubes (8) stationnaire ou bien entraînée dans le sens contraire de la roue primaire (7), formant ensemble une chambre de travail (9) toroïdale remplie ou pouvant être remplie d'un fluide de travail, pour transmettre un couple de rotation de manière hydrodynamique de la roue primaire (7) à la roue secondaire (8),
1.5 le moteur d'entraînement (1) présente un arbre d'entraînement auxiliaire (10), par le biais duquel la roue primaire (7) du retardateur (6) est entraînée;
**caractérisé en ce que**
1.6 le retardateur hydrodynamique (6) est en position connectée au niveau de la transmission (3) sur l'arbre d'entraînement auxiliaire (10) du moteur d'entraînement (1).

2. Train d'entraînement selon la revendication 1, **caractérisé en ce qu'**au moins la roue secondaire (8) du retardateur (6) est montée sur le carter de boîte de vitesses (5).

3. Train d'entraînement selon l'une des revendications 1 ou 2, **caractérisé en ce que** la roue primaire (7) du retardateur (6) est portée par l'arbre d'entraînement auxiliaire (10) et en particulier est monté de façon flottante sur celui-ci.

4. Train d'entraînement selon l'une des revendications 1 ou 2, **caractérisé en ce que** le retardateur (6) présente un arbre d'entrée de retardateur (11) et un carter de retardateur (12), l'arbre d'entrée de retardateur (11) est monté dans le carter de retardateur (12) et porte en particulier la roue primaire (7), et l'arbre d'entrée de retardateur (11) est connecté en particulier directement au niveau de l'arbre d'entraînement auxiliaire (10).

5. Train d'entraînement selon l'une des revendications 3 ou 4, **caractérisé en ce que** le moteur d'entraînement (1) comprend un carter moteur et le carter de retardateur (12) est monté sur le carter moteur (13) et en particulier de façon supplémentaire sur le carter de boîte de vitesses (5).

6. Train d'entraînement selon la revendication 4 **caractérisé en ce que** le carter de retardateur (12) est monté sur le carter de boîte de vitesses (5) et est porté par celui-ci.

7. Train d'entraînement selon l'une des revendications 1 à 6, **caractérisé en ce que** la roue secondaire (8) est bloqué contre toute rotation au niveau du carter de boîte de vitesses (5).

8. Train d'entraînement selon l'une des revendications 1 à 7, **caractérisé en ce que** le retardateur (6) présente un échangeur thermique (14), par l'intermédiaire duquel la chaleur est évacuée du fluide de travail, de l'huile en particulier, en particulier dans un circuit de refroidissement de véhicule (20) connecté à l'échangeur thermique (14) sur le côté secondaire, pour assurer le transfert thermique, par le biais duquel on refroidit également le moteur d'entraînement (1), et l'échangeur thermique (14) est monté en particulier en même temps que le carter de retardateur (12) sur le carter de boîte de vitesses (5).

9. Train d'entraînement selon l'une des revendications 5 à 8, **caractérisé en ce que** la roue secondaire (8) est montée dans le carter de retardateur (12).
